# FASCICULE DE BREVET EUROPEEN

(11) **EP 2 062 328 B1**
(45) Date de publication et mention de la délivrance du brevet: **16.07.2014**
(21) Numéro de dépôt: 07803405.5
(22) Date de dépôt: 11.09.2007
(51) Int. Cl.: B64G 1/10, B64G 1/22, B64G 1/66, G02B 7/183, G02B 23/06, H01Q 1/28, H01Q 15/16, H01Q 19/19

(54) **INSTRUMENT D'ACQUISITION SPATIALE A REFLECTEUR(S) DEPLOYABLE(S) ET A COMPACITE ELEVEE**
HOCHKOMPAKTES AKQUISITIONSINSTRUMENT FÜR BETRIEB IM RAUM MIT EINEM ODER MEHREREN AUSSCHWENKBAREN REFLEKTOREN
HIGHLY COMPACT ACQUISITION INSTRUMENT FOR OPERATION IN SPACE WITH ONE OR MORE DEPLOYABLE REFLECTORS

(30) Priorité: 13.09.2006 FR 0653701
(43) Date de publication de la demande: 27.05.2009
(73) Titulaire: Thales, 92200 Neuilly Sur Seine (FR)
(72) Inventeur: MESRINE, Magali, 94117 Arcueil (FR); GARIN, Stéphane, 94117 Arcueil (FR); ALIS, Claude, 94117 Arcueil (FR); GIRAUD, Dominique, 94117 Arcueil (FR)
(74) Mandataire: Esselin, Sophie
(86) Numéro de dépôt international: PCT/EP2007/059541
(87) Numéro de publication internationale: WO 2008/031826

(56) Documents cités:
- JP-A- 9 312 518
- US-A- 3 540 048
- US-A- 5 255 006
- US-A1- 2005 094 264
- MARTIN F ET AL: "Lockheed Martin Team's Next Generation Space Telescope (NGST) Reference Architecture" PROCEEDINGS OF THE SPIE, SPIE, BELLINGHAM, VA, US, vol. 4013, 2000, pages 17-26, XP002264306 ISSN: 0277-786X
- LAKE M S ET AL: "A deployable primary mirror for space telescopes" PROCEEDINGS OF THE SPIE, SPIE, BELLINGHAM, VA, US, vol. 3785, octobre 1999 (1999-10), pages 1-12, XP002264305 ISSN: 0277-786X

## Description

L'invention concerne le domaine de l'acquisition spatiale de données, et plus précisément les instruments d'acquisition spatiale qui sont embarqués sur des engins spatiaux, comme par exemple des satellites d'acquisition, et dont le diamètre excède très largement celui de la coiffe des fusées (ou lanceurs) qui doivent les transporter dans l'espace, par exemple sur une orbite.

On entend ici par « instrument d'acquisition spatiale » un instrument comportant un réflecteur primaire de grand (voire très grand) diamètre et un réflecteur secondaire chargés conjointement de réfléchir des ondes électromagnétiques vers des moyens d'acquisition spatiaux, montés sur la même structure que celle à laquelle est rattaché le réflecteur primaire ou montés sur un autre engin spatial positionné finement par rapport à celui qui porte le réflecteur primaire, dans le cadre d'un vol en formation.

Des instruments du type précité sont utilisés dans certaines missions d'acquisition spatiale, comme par exemple celles destinées à observer la Terre ou le ciel depuis des orbites hautes, géostationnaires (« GEO »), Molnya ou L2, ou celles dédiées à l'observation grand champ d'objets astronomiques. Le futur télescope JWST (pour « James Webb Space Telescope ») en est un exemple.

Lorsque le réflecteur primaire de l'instrument présente un diamètre qui excède celui de la coiffe de la fusée qui doit le transporter dans l'espace, il doit être compacté (ou replié) au moyen d'un mécanisme approprié pendant la phase de tir (ou de lancement), puis décompacté (ou déployé, ou encore déplié) une fois en orbite grâce au mécanisme et à une stratégie de déploiement.

Plusieurs stratégies de déploiement ont été proposées. Elles consistent généralement à fixer le miroir secondaire sur un mât (ou un autre moyen de support) et à déployer tout ou partie d'un miroir primaire initialement replié. C'est notamment le cas des stratégies décrites dans les documents brevets US 5,898,529 et US 6,226,121.

L'inconvénient principal de ces stratégies réside dans le fait qu'elles nécessitent des mécanismes de déploiement (très) complexes et critiques qui sont de plus généralement lourds et encombrants. En outre, les moyens d'acquisition étant implantés dans une zone éloignée de celle qui loge les miroirs primaire et secondaire et qui permet leur déploiement, ils occupent un volume supplémentaire sous la coiffe du lanceur.

L'invention a donc pour but d'améliorer la situation.

Elle propose à cet effet un instrument d'acquisition spatiale, comprenant un réflecteur primaire déployable, un réflecteur secondaire et des moyens d'acquisition chargés d'acquérir des données à partir des ondes électromagnétiques qui sont réfléchies par les réflecteurs primaire et secondaire.

L'article suivant divulgue les caractéristiques du préambule de la revendication 1: MARTIN F ET AL: "Lockheed Martin Team's Next Generation Space Telescope (NGST) Reference Architecture", PROC. OF THE SPIE, SPIE, BELLINGHAM, VA, US, vol. 4013, 2000, pages 17-26, ISSN: 0277-786X.

Plus précisément l'invention a pour objet un instrument d'acquisition spatiale, comprenant un réflecteur primaire déployable , un réflecteur secondaire et des moyens d'acquisition propres à acquérir des données à partir d'ondes électromagnétiques réfléchies par lesdits réflecteurs primaire et secondaire selon la revendicaton 1.

Cet instrument se caractérise par l'objet de la partie caractérisante de la revendication 1.

L'instrument d'acquisition spatiale selon l'invention peut comporter d'autres caractéristiques, selon les revendications dépendantes, qui peuvent être prises séparément ou en combinaison, et notamment :
- il peut comprendre un premier mécanisme logé partiellement dans le support ou bien solidarisé à la périphérie de ce dernier, couplé aux éléments réfléchissants déployables et chargé de déployer ces derniers entre une position initiale repliée et la position finale déployée ;
   ➢ ce premier mécanisme peut être chargé de maintenir avant déploiement une partie au moins des éléments déployables dans une position initiale dans laquelle ils sont repliés vers le support ;
   > en variante ou en complément ce premier mécanisme peut être chargé de maintenir avant déploiement une partie au moins des éléments déployables dans une position initiale dans laquelle ils sont repliés vers une plateforme à laquelle est solidarisé le support ;
   ➢ ce premier mécanisme peut être chargé de maintenir après déploiement les éléments déployables dans une position finale dans laquelle ils sont écartés du support, leur face réfléchissante étant orientée en direction du réflecteur secondaire ;
- son réflecteur secondaire peut être solidarisé fixement à son support afin d'être constamment placé dans une position fixe par rapport aux moyens de collection d'ondes électromagnétiques des moyens d'acquisition ;
- en variante, il peut comprendre un second mécanisme solidarisé au support, couplé au réflecteur secondaire et chargé de déployer ce dernier entre une position initiale et une position finale déployée dans laquelle il est placé dans une position fixe par rapport aux moyens de collection d'ondes électromagnétiques des moyens d'acquisition.

L'invention propose également un engin spatial équipé d'au moins une plateforme de support et d'au moins un instrument d'acquisition spatiale du type de celui présenté ci-avant et solidarisé à la plateforme de support.

L'invention est particulièrement bien adaptée, bien que de façon non exclusive, aux instruments d'acquisition de type télescope (pour les applications optiques) ou antenne (pour les applications hyperfréquences), destinés à être implantés dans des engins spatiaux, comme par exemple des satellites.

D'autres caractéristiques et avantages de l'invention apparaîtront à l'examen de la description détaillée ci-après, et du dessin annexé, sur lequel :
- la figure 1 illustre de façon schématique, dans une vue en perspective, un exemple d'instrument d'acquisition selon l'invention, une fois son réflecteur primaire déployé (ou déplié),
- la figure 2 est une vue en coupe longitudinale schématique de l'instrument d'acquisition illustré sur la figure 1, avec matérialisation des chemins suivis par les ondes électromagnétiques,
- la figure 3 est une vue du dessus schématique de l'instrument d'acquisition illustré sur la figure 1, lorsqu'il est installé dans la coiffe d'une fusée en position repliée,
- la figure 4 est une vue de côté schématique de l'instrument d'acquisition illustré sur la figure 1, lorsqu'il est installé dans la coiffe d'une fusée en position repliée.

Les dessins annexés pourront non seulement servir à compléter l'invention, mais aussi contribuer à sa définition, le cas échéant.

L'invention a pour objet d'offrir un instrument d'acquisition spatiale destiné à être monté sur un engin spatial (devant être transporté dans l'espace), pourvu d'un réflecteur primaire déployable de (très) grand diamètre couplé à un mécanisme de déploiement de complexité réduite, et présentant une compacité élevée.

Dans ce qui suit, on considère, à titre d'exemple non limitatif, que l'engin spatial sur lequel est (ou doit être) monté l'instrument d'acquisition spatiale est un satellite d'observation. Mais, l'instrument selon l'invention peut être installé sur n'importe quel type d'engin spatial destiné à effectuer une mission d'acquisition de données dans l'espace.

Par ailleurs, on considère dans ce qui suit, à titre d'exemple non limitatif, que l'engin spatial (ici un satellite d'observation) est destiné à remplir une mission d'observation optique de la Terre depuis une orbite géostationnaire (ou « GEO »). Par conséquent, l'instrument d'acquisition spatiale est destiné à acquérir des données d'image. Il s'agit par exemple d'un télescope. Mais l'invention n'est pas limitée à ce type de mission. Elle concerne en effet tout type de mission d'acquisition destinée à acquérir des données depuis l'espace, à partir d'ondes électromagnétiques. L'instrument d'acquisition spatiale peut donc par exemple être également une antenne pour une application hyperfréquence.

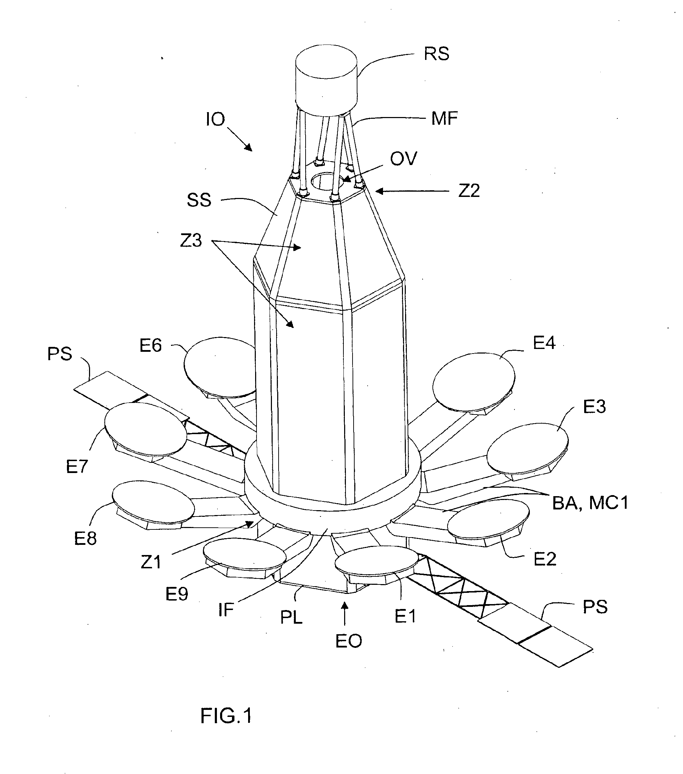

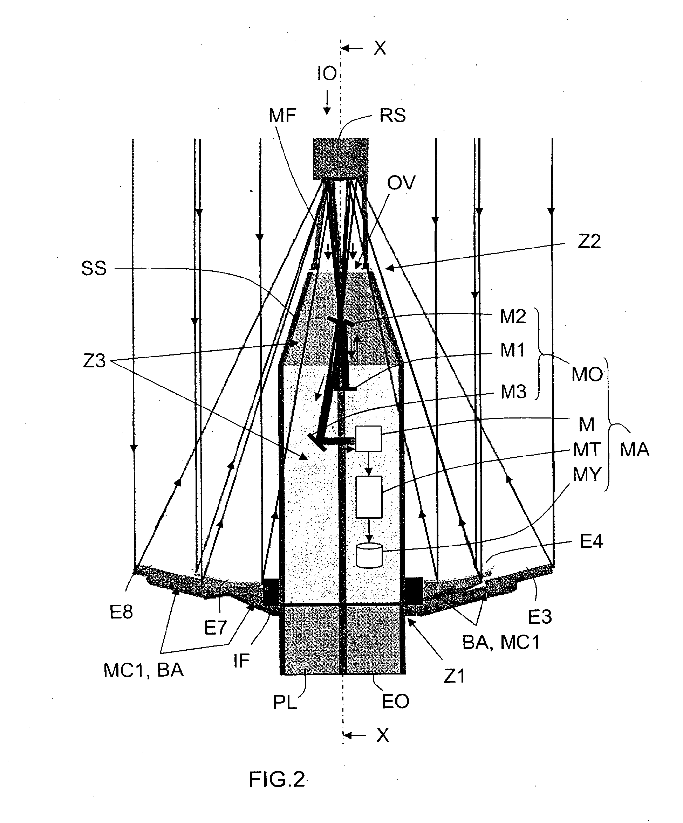

On se réfère tout d'abord aux figures 1 et 2 pour décrire un instrument d'acquisition spatiale IO selon l'invention, ci-après appelé simplement « instrument ».

Un instrument selon l'invention comprend un support (ou structure porteuse) SS, un réflecteur primaire déployable, un réflecteur secondaire RS, éventuellement déployable, et des moyens d'acquisition MA (voir figure 2).

On entend ici par « moyens d'acquisition » tous les éléments qui interviennent dans la chaîne d'acquisition de données en aval du réflecteur secondaire RS. Ils regroupent donc les moyens de collection des ondes électromagnétiques (ou capteurs) M, la combinaison de surfaces réfléchissantes, qui est utilisée pour acheminer les ondes électromagnétiques réfléchies par le réflecteur secondaire RS vers le plan focal de collection (ou détection) où sont situés les moyens de collection M, les moyens de traitement de données MT et l'éventuelle mémoire de stockage MY.

Le support SS est une structure de type axial, c'est-à-dire présentant une extension longitudinale suivant un axe XX plus importante que son extension transversale dans un plan perpendiculaire à l'axe XX, laquelle est limitée par le diamètre interne de la coiffe CO de la fusée (ou du lanceur). Ce support SS est au moins partiellement creux afin de définir une zone d'accueil Z3 dans laquelle est logée une partie au moins des moyens d'acquisition MA.

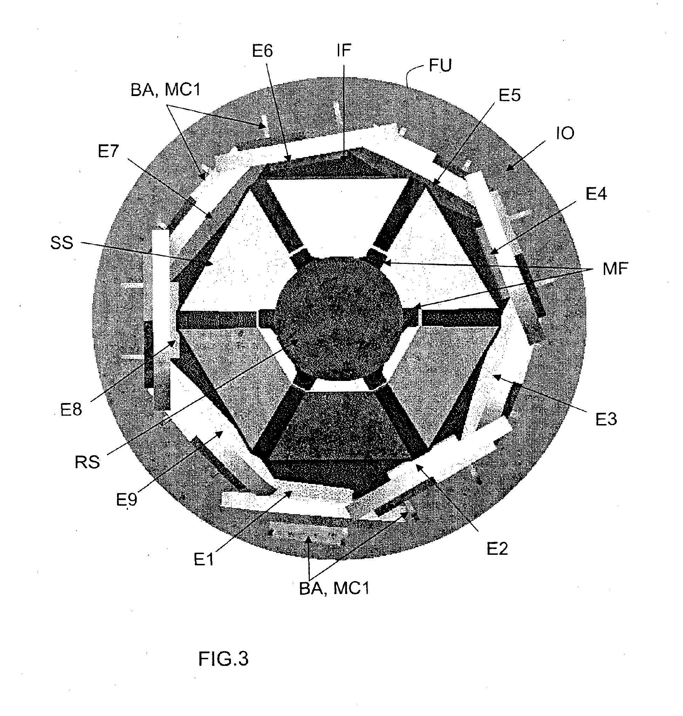

Dans l'exemple illustré, le support SS présente dans une vue en coupe transversale (voir figure 3) une forme générale de type hexagonal. Cette forme est avantageuse car elle confère au support une grande stabilité mécanique. Mais, toute autre forme peut être envisagée.

Le support SS est (destiné à être) solidarisé à une plateforme de support PL du satellite d'observation EO, à laquelle sont par exemple également solidarisés des panneaux solaires (voir figure 1).

Le réflecteur primaire est constitué d'au moins deux éléments réfléchissants déployables Ei qui, une fois déployés dans une position finale, définissent ensemble une surface réfléchissante. Dans l'exemple non limitatif illustré, le réflecteur primaire comprend neuf éléments réfléchissants déployables E1 à E9 (i = 1 à 9). Mais tout autre nombre d'éléments Ei au moins égal à deux peut être envisagé. Par ailleurs, dans l'exemple non limitatif illustré les neuf éléments Ei sont destinés, une fois déployés dans leur position finale, à être placés à la périphérie du support SS, sensiblement à égale distance les uns des autres. Mais, cela n'est pas obligatoire.

Dans le cas d'une application optique, les éléments Ei du réflecteur primaire sont des miroirs chargés, une fois déployés dans leur position finale, de réfléchir des photons (quantification d'ondes électromagnétiques) en direction du réflecteur secondaire RS.

On notera que les éléments Ei peuvent être de toute forme. Par ailleurs, les éléments Ei ne sont pas tous obligatoirement identiques, ni obligatoirement placés en position finale à une même distance de l'axe XX.

On notera également qu'une fois les éléments Ei déployés dans la position finale, la surface réfléchissante qu'ils définissent ensemble n'est pas forcément continue. Lorsque le réflecteur primaire est constitué d'éléments Ei non jointifs (une fois déployés), comme c'est le cas dans l'exemple non limitatif illustré sur les figures 1 à 4, il présente une configuration dite « diluée ».

Les éléments Ei du réflecteur primaire sont couplés au support SS, au niveau d'une première zone Z1, via un premier mécanisme MC1, ici partiellement matérialisé par des bras articulés BA (à titre d'exemple).

Ce premier mécanisme MC1 peut être logé partiellement dans le support SS, ou, comme illustré sur les figures 1 et 2, il peut être solidarisé à la périphérie du support SS, par exemple via une interface IF telle qu'un anneau structural.

La première zone de couplage Z1 est par exemple située, comme illustré, à une première extrémité du support SS. Mais cela n'est pas obligatoire.

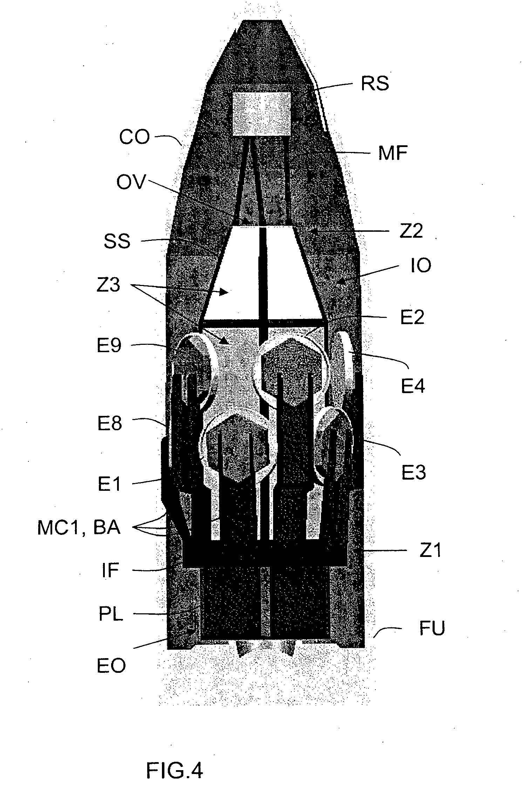

Le premier mécanisme MC1 est chargé de déployer les éléments Ei du réflecteur primaire entre une position initiale repliée (matérialisée sur les figures 3 et 4) et la position finale déployée (matérialisée sur les figures 1 et 2).

Par exemple, et comme illustré sur les figures 3 et 4, le premier mécanisme MC1 est chargé de maintenir avant déploiement les éléments Ei dans une position initiale dans laquelle ils sont repliés vers le support SS. Dans cet exemple, les faces réfléchissantes des éléments Ei sont toutes orientées vers le support SS. Mais, cela n'est pas obligatoire. En effet, ces faces réfléchissantes peuvent être également orientées vers l'extérieur, ou certaines faces réfléchissantes peuvent être orientées vers le support SS et certaines autres vers l'extérieur. On peut même envisager que certaines faces réfléchissantes soient initialement placées de façon oblique. Dans l'exemple illustré, dans la position initiale (repliée) les neuf éléments Ei sont placés à proximité du support SS sur deux niveaux différents. Plus précisément, les éléments E2, E4, E6 et E8 sont placés à un niveau supérieur et les éléments E1, E3, E5, E7 et E9 sont placés à un niveau inférieur, du fait de l'impossibilité de stocker tous les éléments Ei sur un même niveau en raison de leurs dimensions. Dans une variante, on pourrait envisager que certains éléments Ei soient initialement placés contre le support SS au moyen de bras articulés BA orientés vers le haut du support SS, tandis que les autres éléments Ei sont placés contre la plateforme PL au moyen de bras articulés BA orientés vers le bas.

Par ailleurs, et comme illustré sur les figures 1 et 2, le premier mécanisme MC1 peut par exemple être chargé de maintenir après déploiement les éléments Ei dans une position finale dans laquelle ils sont écartés radialement du support SS (et donc de l'axe XX), leurs faces réfléchissantes étant alors orientées en direction du réflecteur secondaire RS. Pour ce faire, les bras articulés BA qui supportent les éléments Ei peuvent par exemple commencer par écarter radialement les éléments Ei du support SS, par rotation, puis ils positionnent les éléments Ei dans leur position finale, par translation. Tout autre premier mécanisme MC1 peut être envisagé, quel que soit le nombre de degrés de liberté. Ainsi, le premier mécanisme MC1 peut comporter des bras possédant une ou plusieurs articulations.

Le réflecteur secondaire RS est constitué d'au moins un élément réfléchissant chargé de réfléchir les ondes électromagnétiques (ici des photons) issu(e)s du réflecteur primaire vers les moyens d'acquisition MA. Dans le cas d'une application optique, cet élément est un miroir.

Le réflecteur secondaire RS est couplé au support SS au niveau d'une seconde zone Z2 distante de la première zone Z1. Cette seconde zone de couplage Z2 est par exemple située, comme illustré, à une seconde extrémité du support SS. Mais cela n'est pas obligatoire.

Ce réflecteur secondaire RS peut être solidarisé fixement au support SS via un moyen de fixation MF (par exemple constitué de bras rigides comme illustré sur les figures). Il est alors constamment placé dans une position fixe par rapport aux moyens M de collection des ondes électromagnétiques des moyens d'acquisition MA, c'est-à-dire pendant et après la phase de lancement (ou transport dans l'espace).

Dans une variante, l'instrument IO peut comprendre un second mécanisme (non représenté) solidarisé au support SS et au réflecteur secondaire RS, et chargé de déplacer (voire déployer) ce dernier entre une position initiale et une position finale déployée dans laquelle il est placé dans une position fixe par rapport aux moyens de collection des moyens d'acquisition MA. Ce second mécanisme peut être logé partiellement dans le support SS ou bien solidarisé à la périphérie de ce dernier. On peut par exemple envisager que le second mécanisme est chargé, d'une part, de maintenir avant déploiement le réflecteur secondaire RS dans une position initiale dans laquelle il est placé contre la seconde extrémité du support SS (ou à l'intérieur de celle-ci), et d'autre part, de l'amener lors du déploiement dans une position finale distante du support SS pour l'y maintenir.

Comme indiqué précédemment, les moyens d'acquisition MA sont logés au moins partiellement à l'intérieur du support SS, par exemple entre ses première Z1 et seconde Z2 zones (d'extrémité) où sont respectivement couplés le réflecteur principal et le réflecteur secondaire RS. Ce positionnement à l'intérieur du support SS permet de réduire considérablement l'encombrement de la combinaison de surfaces réfléchissantes MO, qui est utilisée pour acheminer les ondes électromagnétiques réfléchies par le réflecteur secondaire RS vers le plan focal de collection (ou détection) où sont situés les moyens de collection M, et de diminuer la taille des éléments de la combinaison de surfaces réfléchissantes MO. Il en résulte un gain en volume et en masse qui facilite la mise en orbite de l'instrument IO lorsque son réflecteur principal doit présenter un (très) grand diamètre une fois déployé.

Afin de permettre l'entrée des ondes électromagnétiques réfléchies par le réflecteur secondaire RS à l'intérieur du support SS, ce dernier comporte dans sa seconde zone Z2 une ouverture OV de dimension adaptée aux besoins.

Tout type de moyens d'acquisition MA peut être envisagé, selon l'application.

Les moyens d'acquisition MA qui sont installés dans le support SS comprennent au moins une partie de la combinaison de surfaces réfléchissantes MO, matérialisée sur la figure 2, à titre d'exemple non limitatif, par trois miroirs de renvoi M1, M2 et M3 (de tout type). Ces miroirs de renvoi M1, M2 et M3 sont chargés de faire parvenir au niveau du plan focal de collection (ou détection), où sont placés les moyens de collection M, les ondes électromagnétiques (ici des photons) qui ont été réfléchi(e)s par le récepteur secondaire RS.

Comme illustré sur la figure 2, les moyens de collection M, par exemple des capteurs (ici photoniques), sont également logés dans le support SS. De même, les moyens de traitement MT qui sont chargés de transformer en données, par exemple numériques, les signaux délivrés par les capteurs M, peuvent être également logés dans le support SS. Il en va également de même de l'éventuelle mémoire de stockage de données MY qui peut être prévue pour stocker les données délivrées par les moyens de traitement MT.

On notera que les moyens de traitement MT et l'éventuelle mémoire MY peuvent être installés dans un lieu de l'engin spatial EO qui est éloigné du support SS, par exemple du fait de contraintes thermiques, voire même sur un autre engin spatial dans le cas d'un vol en formation.

Dans l'exemple non limitatif illustré sur la figure 2, l'instrument IO est un télescope à synthèse d'ouverture optique, de type Korsch. Il comprend en plus des réflecteurs primaire et secondaire RS, des moyens optiques complémentaires (ou éléments à surfaces réfléchissantes) MO, constitués de trois miroirs de renvoi M1 à M3. Le premier miroir de renvoi M1 est chargé de réfléchir vers le deuxième miroir de renvoi M2 les photons réfléchis par le réflecteur secondaire RS. Le deuxième miroir de renvoi M2 est chargé de réfléchir vers le troisième miroir de renvoi M3 les photons réfléchis par le premier miroir de renvoi M1. Le troisième miroir de renvoi M3 (de type plan) est chargé de réfléchir vers les moyens de collection M les photons réfléchis par le deuxième miroir de renvoi M2.

L'agencement présenté ci-avant est particulièrement avantageux car il permet d'avoir l'axe de visée du télescope IO parallèle à l'axe de lancement de l'engin spatial EO, ce qui est favorable mécaniquement au moment du tir. En outre, il offre un mode de fixation du réflecteur secondaire RS très stable sur le plan mécanique.

L'invention ne se limite pas aux modes de réalisation d'instrument d'acquisition spatiale et d'engin spatial décrits ci-avant, seulement à titre d'exemple, mais elle englobe toutes les variantes que pourra envisager l'homme de l'art dans le cadre des revendications ci-après.

Ainsi, dans la description qui précède on a décrit un exemple de réalisation de l'invention dans lequel l'intégralité des moyens d'acquisition (combinaison de surfaces réfléchissantes, moyens de collection dans le plan focal, moyens de traitement de données et mémoire de stockage) est logée dans le support des réflecteurs primaire et secondaire. Mais, l'invention n'est pas limitée à ce mode de réalisation. Elle concerne en effet tous les modes de réalisation dans lesquels le support loge une partie au moins des moyens d'acquisition, et notamment une partie au moins de la combinaison de surfaces réfléchissantes, qui fait partie de ces moyens d'acquisition, et les moyens de collection. Par conséquent, le support peut loger tout ou partie de la combinaison de surfaces réfléchissantes, ainsi que les moyens de collection et éventuellement les moyens associés complémentaires (moyens de traitement de données et mémoire de stockage).

## Revendications

1. Instrument d'acquisition spatiale (IO), comprenant un réflecteur primaire déployable , un réflecteur secondaire (RS) et des moyens d'acquisition (MA) propres à acquérir des données à partir d'ondes électromagnétiques réfléchies par lesdits réflecteurs primaire et secondaire (RS), :
- ledit réflecteur primaire est constitué d'au moins deux éléments réfléchissants déployables (Ei) propres, une fois déployés dans une position finale, à définir ensemble une surface réfléchissante,
- les moyens d'acquisition (MA) comportent des moyens de collection (M), des moyens de traitement de données (MT), et une combinaison de surfaces réfléchissantes qui est utilisée pour acheminer les ondes électromagnétiques réfléchies par le réflecteur secondaire vers un plan focal de collection où sont situés des moyens de collection (M) des ondes électromagnétiques,
- ledit instrument d'acquisition spatiale (IO) comprend un support (SS) de type axial, auquel sont solidarisés ledit réflecteur secondaire (RS) et lesdits éléments réfléchissants déployables (Ei) respectivement en des seconde (Z2) et première (Z1) zones distantes, où
- au moins une partie de la combinaison de surfaces réfléchissantes est logée à l'intérieur du support (SS), entre les première (Z1) et seconde (Z2) zones où sont respectivement couplés le réflecteur principal et le réflecteur secondaire (RS), **caractérisé en ce que**
- les moyens de collection (M) sont aussi logés à l'intérieur du support (SS), entre les première (Z1) et seconde (Z2) zones.

2. Instrument d'acquisition spatiale (IO) selon la revendication 1, **caractérisé en ce que** les moyens de traitement de données (MT) sont logés à l'intérieur du support (SS), entre les première (Z1) et seconde (Z2) zones où sont respectivement couplés le réflecteur principal et le réflecteur secondaire (RS).

3. Instrument d'acquisition spatiale (IO) selon l'une quelconque des revendications 1 à 2, **caractérisé en ce que** les moyens d'acquisition comprennent en outre une mémoire de stockage (MY), et **en ce que** ladite mémoire de stockage est logée à l'intérieur du support (SS), entre les première (Z1) et seconde (Z2) zones où sont respectivement couplés le réflecteur principal et le réflecteur secondaire (RS).

4. Instrument d'acquisition spatiale (IO) selon l'une des revendications 1 et 3, **caractérisé en ce qu'**il comprend un premier mécanisme (MC1) couplé auxdits éléments réfléchissants déployables (Ei) et agencé pour déployer ces derniers (Ei) entre une position initiale repliée et ladite position finale déployée, et **en ce que** ledit support (SS) loge partiellement ledit premier mécanisme (MC1).

5. Instrument d'acquisition spatiale (IO) selon l'une des revendications 1 et 3, **caractérisé en ce qu'**il comprend un premier mécanisme (MC1), solidarisé à la périphérie dudit support (SS), couplé auxdits éléments réfléchissants déployables (Ei) et agencé pour déployer ces derniers (Ei) entre une position initiale repliée et ladite position finale déployée.

6. Instrument d'acquisition spatiale (IO) selon l'une des revendications 4 et 5, **caractérisé en ce que** ledit premier mécanisme (MC1) est agencé pour maintenir avant déploiement une partie au moins des éléments déployables (Ei) dans une position initiale dans laquelle ils sont repliés vers ledit support (SS).

7. Instrument d'acquisition spatiale (IO) selon l'une des revendications 4 à 6, **caractérisé en ce que** ledit premier mécanisme (MC1) est agencé pour maintenir avant déploiement une partie au moins des éléments déployables (Ei) dans une position initiale dans laquelle ils sont repliés vers une plateforme (PL) à laquelle est solidarisé ledit support (SS).

8. Instrument d'acquisition spatiale (IO) selon l'une des revendications 4 à 7, **caractérisé en ce que** ledit premier mécanisme (MC1) est agencé pour maintenir après déploiement lesdits éléments déployables (Ei) dans une position finale dans laquelle ils sont écartés dudit support (SS), leur face réfléchissante étant orientée en direction dudit réflecteur secondaire (RS).

9. Instrument d'acquisition spatiale (IO) selon l'une des revendications 1 à 8, **caractérisé en ce que** ledit réflecteur secondaire (RS) est solidarisé fixement audit support (SS) de manière à être constamment placé dans une position fixe par rapport à des moyens de collection (M) d'ondes électromagnétiques desdits moyens d'acquisition.

10. Instrument d'acquisition spatiale (IO) selon l'une des revendications 1 à 8, **caractérisé en ce qu'**il comprend un second mécanisme solidarisé audit support (SS), couplé audit réflecteur secondaire (RS) et agencé pour déployer ce dernier (RS) entre une position initiale et une position finale déployée dans laquelle il est placé dans une position fixe par rapport à des moyens de collection (M) d'ondes électromagnétiques desdits moyens d'acquisition .

11. Engin spatial (EO), **caractérisé en ce qu'**il comprend au moins une plateforme de support (PL) et au moins un instrument d'acquisition spatiale (IO) selon l'une des revendications précédentes et solidarisé à ladite plateforme de support (PL).

## Patentansprüche

1. Räumliches Erfassungsinstrument (IO), das einen primären ausfahrbaren Reflektor, einen sekundären Reflektor (RS) und Erfassungsmittel (MA) zum Erfassen von Daten von elektromagnetischen Wellen umfasst, die von dem primären und dem sekundären Reflektoren (RS) reflektiert werden:
- wobei der primäre Reflektor von wenigstens zwei ausfahrbaren reflektierenden Elementen (Ei) gebildet wird, die so ausgelegt sind, dass sie, wenn sie in eine Endposition ausgefahren sind, zusammen eine reflektierende Fläche definieren;
- wobei die Erfassungsmittel (MA) Sammelmittel (M), Datenverarbeitungsmittel (MT) und eine Kombination von reflektierenden Flächen umfassen, die zum Leiten der vom sekundären Reflektor reflektierten elektromagnetischen Wellen zu einer Sammelbrennebene reflektiert werden, wo sich Mittel (M) zum Sammeln von elektromagnetischen Wellen befinden;
- wobei das räumliche Erfassungsinstrument (IO) einen Träger (SS) des axialen Typs umfasst, mit dem der sekundäre Reflektor (RS) und die in einer zweiten (Z2) bzw. ersten (Z1) Fernzone ausfahrbaren reflektierenden Elemente (Ei) verbunden sind, wobei
- wenigstens ein Teil der Kombination von reflektierenden Flächen auch im Innern des Trägers (SS) zwischen der ersten (Z1) und der zweiten (Z2) Zone untergebracht ist, wo der Hauptreflektor und der sekundäre Reflektor (RS) jeweils gekoppelt sind, **dadurch gekennzeichnet, dass** die Sammelmittel (M) ebenfalls im Innern des Trägers (SS) zwischen der ersten (Z1) und der zweiten (Z2) Zone untergebracht sind.

2. Räumliches Erfassungsinstrument (IO) nach Anspruch 1, **dadurch gekennzeichnet, dass** die Datenverarbeitungsmittel (MT) im Innern des Trägers (SS) zwischen der ersten (Z1) und der zweiten (Z2) Zone untergebracht sind, wo der Hauptreflektor bzw. der sekundäre Reflektor (RS) gekoppelt sind.

3. Räumliches Erfassungsinstrument (IO) nach einem der Ansprüche 1 bis 2, **dadurch gekennzeichnet, dass** die Erfassungsmittel ferner einen Speicher (MY) umfassen, und dadurch, dass der Speicher im Innern des Trägers (SS) zwischen der ersten (Z1) und der zweiten (Z2) Zone untergebracht sind, wo der Hauptreflektor bzw. der sekundäre Reflektor (RS) gekoppelt sind.

4. Räumliches Erfassungsinstrument (IO) nach Anspruch 1 oder 3, **dadurch gekennzeichnet, dass** es einen ersten Mechanismus (MC1) umfasst, der mit den ausfahrbaren reflektierenden Elementen (Ei) gekoppelt und zum Ausfahren dieser Elemente (Ei) zwischen einer ersten anfänglichen zusammengeklappten Position und der ausgefahrenen Endposition ausgelegt ist, und dadurch, dass der Träger (SS) den primären Mechanismus (MC1) teilweise aufnimmt.

5. Räumliches Erfassungsinstrument (IO) nach Anspruch 1 oder 3, **dadurch gekennzeichnet, dass** es einen ersten Mechanismus (MC1) umfasst, der mit der Peripherie des Trägers (SS) verbunden ist, gekoppelt mit den ausfahrbaren reflektierenden Elementen (Ei) und ausgelegt zum Ausfahren dieser Elemente (Ei) zwischen einer anfänglichen zusammengefalteten Position und der endgültigen ausgefahrenen Position.

6. Räumliches Erfassungsinstrument (IO) nach Anspruch 4 oder 5, **dadurch gekennzeichnet, dass** der erste Mechanismus (MC1) zum Halten, vor dem Ausfahren, wenigstens eines Teils der ausfahrbaren Elemente (Ei) in einer Anfangsposition ausgelegt ist, in der sie in Richtung auf den Träger (SS) zusammengeklappt werden.

7. Räumliches Erfassungsinstrument (IO) nach einem der Ansprüche 4 bis 6, **dadurch gekennzeichnet, dass** der erste Mechanismus (MC1) zum Halten, vor dem Ausfahren, wenigstens eines Teils der ausfahrbaren Elemente (Ei) in einer Anfangsposition ausgelegt ist, in der sie zu einer Plattform (PL) zusammengeklappt werden, mit der der Träger (SS) verbunden ist.

8. Räumliches Erfassungsinstrument (IO) nach einem der Ansprüche 4 bis 7, **dadurch gekennzeichnet, dass** der erste Mechanismus (MC1) zum Halten, nach dem Ausfahren, der ausfahrbaren Elemente (Ei) in einer Endposition ausgelegt ist, in der sie von dem Träger (SS) getrennt sind, wobei ihre reflektierende Fläche in Richtung auf den sekundären Reflektor (RS) orientiert ist.

9. Räumliches Erfassungsinstrument (IO) nach einem der Ansprüche 1 bis 8, **dadurch gekennzeichnet, dass** der sekundäre Reflektor (RS) starr an dem Träger (SS) befestigt ist, um konstant in einer festen Position relativ zu einem Mittel (M) zum Sammeln von elektromagnetischen Wellen der Erfassungsmittel platziert zu werden.

10. Räumliches Erfassungsinstrument (IO) nach einem der Ansprüche 1 bis 8, **dadurch gekennzeichnet, dass** es einen zweiten Mechanismus umfasst, der mit dem Träger (SS) verbunden ist, gekoppelt mit dem sekundären Reflektor (RS) und ausgelegt zum Ausfahren des sekundären Reflektors (RS) zwischen einer Anfangsposition und einer ausgefahrenen Endposition, in der er in einer festen Position relativ zu Mitteln (M) zum Sammeln von elektromagnetischen Wellen der Erfassungsmittel platziert ist.

11. Raumfahrzeug (EO), **dadurch gekennzeichnet, dass** es wenigstens eine Trägerplattform (PL) und wenigstens ein räumliches Erfassungsinstrument (IO) nach einem der vorherigen Ansprüche umfasst und mit der Trägerplattform (PL) verbunden ist.

## Claims

1. A spatial acquisition instrument (IO) comprising a primary deployable reflector, a secondary reflector (RS) and acquisition means (MA) designed to acquire data from electromagnetic waves reflected by said primary and secondary reflectors (RS):
- said primary reflector is formed by at least two deployable reflecting elements (Ei) that are designed to define together, once deployed in a final position, a reflecting surface;
- said acquisition means (MA) comprise collection means (M), data processing means (MT) and a combination of reflecting surfaces that is used to direct the electromagnetic waves reflected by the secondary reflector toward a collection focal plane where means (M) for collecting electromagnetic waves are located;
- said spatial acquisition instrument (IO) comprises a support (SS) of the axial type, to which said secondary reflector (RS) and said deployable reflecting elements (Ei) are connected in second (Z2) and first (Z1) remote zones, respectively,
- where at least part of the combination of reflecting surfaces is housed inside said support (SS) between said first (Z1) and second (Z2) zones where the main reflector and said secondary reflector (RS) are respectively coupled, **characterised in that**
- said collection means (M) are also housed inside said support (SS) between said first (Z1) and second (Z2) zones.

2. The spatial acquisition instrument (IO) according to claim 1, **characterised in that** said data processing means (MT) are housed inside said support (SS) between said first (Z1) and second (Z2) zones where said main reflector and said secondary reflector (RS) are respectively coupled.

3. The spatial acquisition instrument (IO) according to any one of claims 1 to 2, **characterised in that** said acquisition means further comprise a storage memory (MY), and **in that** said storage memory is housed inside said support (SS) between said first (Z1) and second (Z2) zones where said main reflector and said secondary reflector (RS) are respectively coupled.

4. The spatial acquisition instrument (IO) according to claim 1 or 3, **characterised in that** it comprises a first mechanism (MC1) coupled to said deployable reflecting elements (Ei) and arranged to deploy said elements (Ei) between a first initial folded position and said final deployed position, and **in that** said support (SS) partially houses said first mechanism (MC1).

5. The spatial acquisition instrument (IO) according to claim 1 or 3, **characterised in that** it comprises a first mechanism (MC1) connected to the periphery of said support (SS), coupled to said deployable reflecting elements (Ei) and arranged to deploy said elements (Ei) between an initial folded position and said final deployed position.

6. The spatial acquisition instrument (IO) according to claim 4 or 5, **characterised in that** said first mechanism (MC1) is arranged to maintain, before deployment, at least part of the deployable elements (Ei) in an initial position, in which they are folded toward said support (SS).

7. The spatial acquisition instrument (IO) according to any one of claims 4 to 6, **characterised in that** said first mechanism (MC1) is arranged to maintain, before deployment, at least part of the deployable elements (Ei) in an initial position, in which they are folded toward a platform (PL) to which said support (SS) is connected.

8. The spatial acquisition instrument (IO) according to any one of claims 4 to 7, **characterised in that** said first mechanism (MC1) is arranged to maintain, after deployment, said deployable elements (Ei) in a final position, in which they are separated from said support (SS), with their reflecting face being oriented toward said secondary reflector (RS).

9. The spatial acquisition instrument (IO) according to any one of claims 1 to 8, **characterised in that** said secondary reflector (RS) is rigidly connected to said support (SS) so as to be constantly placed in a fixed position relative to means (M) for collecting electromagnetic waves of said acquisition means.

10. The spatial acquisition instrument (IO) according to any one of claims 1 to 8, **characterised in that** it comprises a second mechanism connected to said support (SS), coupled to said secondary reflector (RS) and arranged to deploy said secondary reflector (RS) between an initial position and a final deployed position, in which it is placed in a fixed position relative to means (M) for collecting electromagnetic waves of said acquisition means.

11. A spacecraft (EO), **characterised in that** it comprises at least one support platform (PL) and at least one spatial acquisition instrument (IO) according to any one of the preceding claims, which is connected to said support platform (PL).
